**Europäisches Patentamt**

(19) **European Patent Office**

**Office européen des brevets**

(11) Publication number : **0 325 315 B1**

# (12) EUROPEAN PATENT SPECIFICATION

(45) Date of publication of patent specification :
27.05.92 Bulletin 92/22

(21) Application number : 89200040.7

(22) Date of filing : 09.01.89

(51) Int. Cl.$^5$: **A23L 1/31**, A23L 1/314,
A23L 1/317, A23L 1/05,
A23D 7/00, A23D 9/00

(54) **Low-fat meat products and method of preparing them.**

(30) Priority : 11.01.88 US 141944

(43) Date of publication of application :
26.07.89 Bulletin 89/30

(45) Publication of the grant of the patent :
27.05.92 Bulletin 92/22

(84) Designated Contracting States :
AT BE CH DE ES FR GB GR IT LI NL SE

(56) References cited :
EP-A- 0 074 185
DE-A- 2 254 045
FR-A- 2 322 550
US-A- 3 519 434
US-A- 4 143 164
US-A- 4 504 515

(72) Inventor : **Izzo, Henry J.**
**518 Golf Links Drive**
**Bridgewater, NJ 08807 (US)**
Inventor : **Lingelbach, Richard H.**
**17 North Cadillac Drive**
**Somerville NJ 08876 (US)**
Inventor : **Mordini, Mauro R.**
**769 Vail Road**
**Parsipanny, NJ 07054 (US)**

(74) Representative : **Roscoe, Brian Corrie et al**
**UNILEVER PLC Patents Division P.O. Box 68**
**Unilever House**
**London EC4P 4BQ (GB)**

(73) Proprietor : **UNILEVER NV**
**Burgemeester s'Jacobplein 1 P.O. Box 760**
**NL-3000 DK Rotterdam (NL)**
(84) **BE CH DE ES FR GR IT LI NL SE AT**

Proprietor : **UNILEVER PLC**
**Unilever House Blackfriars P.O. Box 68**
**London EC4P 4BQ (GB)**
(84) **GB**

## Description

The present invention relates to processed meat products having low fat content while still retaining highly desirable appearance, taste and cooking performance characteristics, and to a method of making said products. More particularly, the present invention relates to low-fat emulsion-type sausage products and to a novel method for making said products.

## BACKGROUND OF THE INVENTION

The prior art has adopted a number of approaches in attempts to reduce the fat and cholesterol content of prepared meat products. One such approach is found in U.S. Patent N° 3,023,104 wherein the desired results are obtained by simply extending conventional products through the addition of crystallite aggregates of cellulose; the cellulose being inert, the resulting product has less of each ingredient of the natural product. U.S. Patent N° 4,504,515, in another approach, prepares low-fat meat products by combining high levels of skimmed milk or whole milk with comminuted lean meat. A low-cholesterol sausage analog of the ground meat type using egg white as the heat-denaturable binder system is described in U.S. Patent N° 4,376,134.

In another aspect of the prior art, meat analogs, such as bacon and sausage analogs, have been prepared by preparing separate phases, one for the fat phase and a second lean meat phase and by then combining these phases to provide a completed product. The intent here is to prepare analogs of the respective lean and fat portions of the natural meat product and to then combine them. In the case of bacon, for example, as described in U.S. Patent N° 4,143,164, two separate phases are prepared, joined together by layering, and the layered mass is subsequently heat-set to form the final product. According to the patent, the fat phase analog is an aqueous matrix of a heat-coagulable protein from the group consisting of egg albumen and blood albumen, together with a water-soluble film-forming component such as gelatin. The matrix has a fat component dispersed therein as fine droplets. The fat phase analog in the example contains about 24% water and about 47% oil, the balance being egg albumen, flavour, colour and 2% gelatin. The fat is dispersed in a continuous matrix containing the gelatin and heat-coagulable protein, and the stability of the fat dispersion depends upon the coagulating action of the heat employed during processing.

Other attempts have been made to prepare low-fat products utilizing technology which forces meat protein to bind increased quantities of water or which entail the use of cereal protein and/or carbohydrate extenders to act as agents which bind larger quantities of water in the product. The resulting products generally have an unacceptable texture and taste, being either overly wet or mealy in nature.

The art of making processed meat products and particularly those known as emulsion-type sausage products is highly developed. The raw materials used in making sausages of this type vary with the nature of the product being made and with the availability of different cuts of meat. In all of the emulsion-type processed meat products, salt is added to the meat and the meat comminuted in the presence of sufficient water to solubilize a meat protein called myosin. The source of the myosin is the non-collagen meat fibers. The myosin forms a coating around each individual fat globule in the emulsion which, upon heating, sets to form a matrix which retains the structure of the product.

In the United States, government regulations place certain constraints on the fat content of processed meat products and upon their moisture content and shrinkage characteristics. For example, emulsion-type sausages such as frankfurters are allowed to have no more than 30% by weight of fat. In addition, the finished product must have a moisture content which does not exceed four times the percentage of protein plus 10% of the finished weight unless the fat percentage is lower than the legally permitted maximum.

The presence of fat in emulsion-type processed meats, such as frankfurters, contributes to its eating qualities and it is desirable to have 25% to 30% fat in frankfurters in order to provide a product which is flavourful, succulent and has the tender texture found acceptable to most consumers. Products in some parts of the United States are formulated to have lower levels of fat, but such products are found to be tough, not succulent, and undesirable for nationwide distribution. A substantial level of fat apparently modifies the nature of the matrix formed during the heat setting or coagulation of emulsion. Thus, although it is desirable for dietary reasons to reduce the fat content of frankfurters to substantially below the 30% maximum permitted, such reduction in fat level cannot be achieved using present-day technology without a concomitant substantial sacrifice in the texture and flavour quality of the product.

## STATEMENT OF THE INVENTION

It has now been found that a low-fat processed meat product of excellent eating qualities is provided by preparing a product comprising a continuous phase of a heat-set meat emulsion, characterised in that the product also contains a discontinuous phase consisting of particles of a water and oil emulsion, comprising an edible fat and from 0.5 to 10 percent by weight of the aqueous phase of the water and oil emulsion of an aqueous hydrocolloid solution or dispersion, the major portion of the fat in the product being supplied by the water and oil emulsion, and the weight ratio of the heat-set meat emulsion to the water and oil emulsion being 2.5:1.

By a hydrocolloid is understood throughout this specification and the attached claims gelatin, the seaweed extracts, like agar and carrageenan, the plant seed gums, like locust bean gum, the fermentation gums, like xanthan gum, and mixtures of the plant seed gums and the seaweed extracts or the fermentation gums.

In a preferred embodiment, the products of the present invention are emulsion-type sausages having a fat content in the range of 9% to 20%, the major portion of which is dispersed throughout the emulsion matrix as droplets of water in oil emulsion, the discontinuous phase of which is an aqueous gelatin solution wherein the gelatin is present in an amount higher than the critical concentration at 59°F (15°C). (The critical concentration of gelatin is the concentration of gelatin in solution where the protein-protein interaction can occur, which is about 0.003% by weight.)

The products of the present invention have a fat content ranging from two-thirds to one-half less than that which these meat products normally contain. Frankfurters, for example, which have a standard of identity which allows for up to 30% fat in the finished product, can be made according to this invention to contain as little as 9% fat, without a sacrifice in eating quality or appearance of the final product.

It has further been found that the highly desirable product of the present invention may be provided by a method which includes the steps of:

(a) forming a water and oil emulsion by combining an aqueous hydrocolloid solution or dispersion with an edible fat,

(b) forming a meat emulsion of high protein content and good binding capacity,

(c) dispersing droplets of the water and oil emulsion formed in step (a) evenly throughout the meat emulsion formed in step (b) and

(d) causing the meat emulsion to set.

It is preferred that the fat content of the product be in the range of 9% to 20% by weight, and that the major portion of the fat be supplied by the water and oil emulsion formed in step (a). It is further preferred that the meat emulsion of step (b) and the water and oil emulsion of step (a) be combined in the relative proportion, by weight, of 2.5 to 1.0. It is also preferred that the meat emulsion be caused to set by heating.

It is further preferred that, in the formation of a water and oil emulsion by using gelatin as the hydrocolloid, the aqueous gelatin solution has a gelatin concentration above the critical concentration at 59°F (15°C).

Thus, a major portion of the fat content of the products of the invention is extended by combination with the hydrocolloid. This permits the lean portion of the meat product or emulsion to remain essentially the same, undiluted with excess water, which in turn permits maintenance of normal texture and taste characteristics in the final product.

## DETAILED DESCRIPTION OF THE INVENTION

The products with which the present invention is concerned are all processed meat products which normally include a substantial level of fat in order to obtain desired eating characteristics. More particularly, the products of this invention are those processed meat products which involve the preparation of meat emulsions utilizing myosin as a binder. Examples of such products include ground meat products such as breakfast sausage, Italian sausage, chopped meat for use in hamburgers and meat loaf, and luncheon meats. This invention will be further described in terms of an emulsion-based sausage product, such as frankfurters, knackwurst, bologna, liverwurst, and braunschweiger, but it is understood to apply to all processed meat products utilizing myosin to bind meat particles, including fat, in a texture-imparting matrix of meat protein.

The first step in the process of the present invention involves the preparation of a water and oil emulsion by means of an aqueous hydrocolloid solution or dispersion. It has been found to be important that the mixture of the aqueous hydrocolloid solution or dispersion and the fat is well dispersed and that the water droplets preponderantly have a small size (1-10 μm). If the water droplets are too small, however, the mouth-feel characteristics of the final meat products are less acceptable. Dependent on the type of hydrocolloid used and the process for making the water and oil emulsion, water-in-oil (W/O) or oil-in-water (O/W) emulsions are obtained.

If gelatin is used as the hydrocolloid, mainly W/O emulsions are obtained. The gelatin stabilizes the emulsion and, where the product is eaten cold, will give the same taste and textural impression as given by fat; both gelatin and food grade fats melt on the tongue at roughly comparable temperatures. It is preferred that sufficient gelatin be present to ensure that the emulsion droplets contain an aqueous gel at room temperature. Thus, the gelatin present in the edible aqueous gelatin solution should be in an amount higher than the critical concentration at 59°F (15°C). On the other hand, a high level of gelatin will result in a tough, rubbery product. The precise amount of gelatin required is not critical, and in the usual case, amounts ranging from 1-10 times the critical concentration will be satisfactory. The optimum amount of gelatin is in the range of 1.5-5% by weight of the aqueous phase of the water and oil emulsion, with a level of 3% on the same basis being preferred. It is also noted that the bloom value of the gelatin used can vary; good results are obtained using pork skin gelatin, type A, of 170, 225 and 260 bloom. Beef bone gelatin of the same bloom strength is also suitable.

The amount of hydrocolloid in general ranges from 0.5 to 10% by weight of the aqueous phase of the water and oil emulsion.

The aqueous hydrocolloid solution or dispersion is prepared by dissolving or dispersing the hydrocolloid in water, optionally at elevated temperatures. Normally, the powdered hydrocolloid is added to the water and the mixture allowed to stand until the powder is wetted. The mixture may then be heated, for example to 140°F (60°), and stirred until the hydrocolloid is dissolved or dispersed.

It is preferred, for reasons of microbiological stability, that the hydrocolloid solution or dispersion contains salt and curing agent, and at approximately the same level as the high-protein meat phase. Accordingly, sodium chloride is added to the hydrocolloid solution or dispersion at this stage, preferably at a level of 2% by weight of the aqueous solution. Sodium nitrite is also added, preferably at a level of 0.025%.

The hydrocolloid solution or dispersion is also advantageously provided with auxiliary flavouring substances such as commercially available meat flavours. In addition, reducing sugars may be added to produce meat flavours in situ, e.g. by reaction with amino acids in the aqueous gelatin phase.

The fat component of the water and oil emulsion phase may be any edible fat compatible with the processed meat product being produced. In making frankfurters, for example, the usual frankfurter raw materials may be utilized. One excellent product was made utilizing beef trimmings containing 80% fat and 20% lean. Beef trimmings having 50% lean and 50% fat may also be used. Meat trimmings having 12% lean and 88% fat are also useful, but are not normally available on a commercial basis.

The meat trimmings needed as a source of fat are initially ground, as through a % inch grinding plate, and then comminuted in a high speed blender, such as a Stephen Vertical-Cutter/Mixer (Trade Mark) operated at 3400 rpm. If the trimmings are frozen, they may be flaked or chipped prior to grinding.

The water and oil emulsion is next prepared by combining the hydrocolloid solution or dispersion with the comminuted fat-rich meat trimmings in a high speed blender, such as the Stephen Vertical-Cutter/Mixer (Trade Mark) operated at the 3400 rpm level. The temperature of the hydrocolloid solution or dispersion when added is preferably 70°-85°F (21°-30°C), and the comminuted meat trimmings are preferably at 70°F (21°C). The blender is operated for from one to five minutes, depending on the hardness of the fat trimmings and the temperature of the hydrocolloid solution or dispersion. The type of the water and oil emulsion is determined by microscopic examination or electrical conductivity measurement.

Other suitable edible fats which may be used in the practice of this invention include various animal and vegetable or synthetic fats. It may be a single fat or a fat fraction or a mixture of fats and/or fat fractions.

At least part of the fat may be replaced by a low-calorie fat replacer. Particularly suitable fat replacers are the edible polyesters of polyhydric alcohols having at least four free hydroxyl groups, such as polyglycerols, sugars or sugar alcohols, and saturated or unsaturated, straight or branched alkyl chain $C_8$-$C_{24}$ fatty acids. The polyhydric alcohol fatty acid polyesters include any such polyesters or mixtures thereof of which, on an average, at least 70% of the polyhydric alcohol hydroxyl groups have been esterified with the fatty acids. Also fatty alkyl ether derivatives of glycerol, esters of $C_8$-$C_{24}$ fatty alcohols and polycarboxylic acids, and waxes can be used for replacing at least part of the fat.

In accordance with the second stage of preparing the product of this invention, a meat emulsion of high protein content and good binding capacity is prepared using high protein content lean meats in accordance with any of several prior art procedures used in making sausage emulsions. Meat chunks of meats such as bull meat, boneless primal cuts of cattle, hogs, veal, sheep, as well as chicken and turkey, or other cuts or mixtures thereof, may be employed. In accordance with one preferred embodiment, beef trimmings having 80-90% lean meat, with the balance fat, are placed in a chopper, mixed with sodium chloride, 2%, sodium nitrite, 0.02%, sodium erythorbate, 0.04%, and added water and the mixture is chopped to a fine consistency. A "sticky" feel develops indicating that the water-soluble meat protein myosin has been solubilized and that the emulsion has developed a good binding capacity.

As recognized in the art, too great a build-up of heat is to be avoided at this stage of the emulsion preparation. Temperatures above 110°-115°F (43°-46°C) cause premature coagulation or denaturing of the protein and should be avoided to ensure that a stable meat emulsion is obtained.

Additives other than the salt and curing agents may be beneficial. Emulsifying agents like fatty acid monoglycerides and/or diglycerides, stearoyl lactylates or lecithin, may be added to improve the emulsion. Good results have been obtained, for example, using a mixture of emulsifying agents comprising 0.3% Myverol (Trade Mark), a mixture of mono- and diglycerides and 0.2% lecithin, both by weight of the fat in the meat emulsion.

The meat emulsion of high protein content may additionally contain other edible materials such as vegetables, herbs, spices, vegetable protein such as soy bean protein and fungal protein, and functional additives, such as anti-oxidants.

The water and oil emulsion and the meat emulsion of high protein content are combined in proportions sufficient to provide a final frankfurter of desired low fat content while maintaining the proportion of water to protein within the constraints set forth by government regulations. The exact proportions within which these phases are combined will depend on the nature of the lean meat and fat components of each of these two phases and will vary in accordance with considerations well known in the art.

It is also noted that the process of this invention which uses two phases, that is, the water and oil emulsion containing a hydrocolloid and the high protein meat emulsion, may be used to advantage in the art recognized procedures known as least-cost formulation and pre-blending of sausage. The water and oil emulsion containing hydrocolloid provides the major fat element of the composition and permits the realization of a high quality product having as little as 9% fat.

The proportion of edible fat to aqueous hydrocolloid solution in the water and oil emulsion may vary, depending on the fat content of the high protein content meat emulsion and upon the fat content and water content desired in the final product. One preferred water and oil emulsion contained, by weight, 32% meat fat, 8% lean meat and 60% of a 3%, by weight, aqueous gelatin solution.

The invention will be further described in the following examples:

Example 1

Procedure for Making Low-Fat Frankfurters

Low-fat frankfurters having half the fat of normal frankfurters, e.g. 15% fat as compared with 30% fat, were prepared as follows:

1. Preparation of water-in-oil emulsion

An aqueous gelatin solution containing 3.0% by weight of 225 bloom pork skin type A gelatin was prepared by dissolving the gelatin in the water at 140°F (60°C).

Sodium chloride at a level of 2%, and sodium nitrite, at a level of 0.025% by weight were added to and dissolved in the gelatin solution.

Beef trimmings containing 80% fat and 20% lean meat were ground by passage through a $\frac{1}{4}$ inch grinding plate. The ground trimmings were then placed in a Stephen Vertical Cutter/Mixer, Code N° 2184, Model VCM-12 (Trade Mark: made by the Stephen Food Technology Corp. of West Germany). The Stephen Cutter (Trade Mark) was operated at 3400 rpm for from 4 to 6 minutes, raising the temperature to between 70°F to 85°F (21.1°C to 29.4°C). The aqueous gelatin solution, at a temperature of 80°-85°F (26.7°-29.4°C), was then added to the Stephen Cutter (Trade Mark) and combined with the comminuted trimmings in the proportion by weight of 60% aqueous gelatin solution and 40% of the 80% fat/20% lean trimmings. The cutter/mixer was then operated at 3400 rpm during a period of one minute to five minutes, depending on the hardness of the fat trimmings and the temperature of the gelatin solution, and until microscopic examination confirmed the product to be a water-in-oil emulsion.

2. Preparation of the frankfurters

After preparing the water-in-oil emulsion, a relatively conventional method of producing frankfurters was used. Following the normal procedure for making frankfurters, 56.31% by weight of lean meat, in the form of beef trimmings having 90% lean meat with the corresponding differences present as fat, was put into a Hobart Chopper (Trade Mark) where it was mixed with sodium chloride, 2%, sodium nitrite, 0.02%, and sodium erythorbate at 0.04%, all by weight of the finished product, and 17.5% by weight added water and was chopped to a fine consistency. At an initial point in the chopping process, the temperature of the lean beef was approximately 35°-45°F (1.5°-7.5°C) and by the end of the chopping process, before the water-in-oil emulsion was added, the temperature of the emulsion had increased to approximately 50°F (10°C). At that point, the lean beef with added salt, curing agents, seasoning and added water was relatively finely chopped and had a "sticky" feel, indicating that available meat proteins were solubilized.

The material was then taken from the meat chopper, put into a Stephen Cutter (Trade Mark) and 24.13 wt.% of the water-in-oil emulsion prepared earlier was added. The mixture was then high shear blended in the Stephen Cutter (Trade Mark) at 3400 rpm for a period of 1.5 to 5 minutes to a final temperature of approximately 65°F (18°C). The mixture was then stuffed with a normal meat stuffer, hydraulic pressure causing the meat mixture to extrude through a horn into a synthetic casing of approximately 26 mm. The stuffed casing was processed in a traditional smoke-house using the following times and temperatures:

30 minutes at 140°F (60°C)
30 minutes at 150°F (65.6°C)
30 minutes at 165°F (73.9°C)
12 minutes at 175°F (79.5°C)

and held at 175°F (79.5°C) until a final internal sausage temperature of 165°F (73.9°C) was reached. The frankfurters were then cooled in a cold water bath and stored at 40°F (4.5°C).

The finished product had the following analysis:

Protein       - 15.30%

Fat           - 13.83%

Water         - 69.13%

Salt, Spices  - 1.74%

Upon evaluation, the frankfurters were found to be of high quality, being succulent and having an excellent texture and appearance.

Example 2

The gelatin-containing water-in-oil emulsion prepared in Example 1 was used to prepare frankfurters, employing more traditional frankfurter making equipment. A Buffalo Cutter (Chopper) (Trade Mark) was used to mix the 24.13 wt.% of water-in-oil emulsion with 56.31 wt.% of the lean meat, to which salt, sodium nitrite, sodium erythorbate, and seasoning had already been added. Beef trimmings having 70% to 90% lean meat were added to the chopper with sodium chloride, 2%, sodium nitrite at 0.02% and sodium erythorbate at 0.04%, all by weight of the finished product. The mixture was chopped 3-6 minutes at 35°-45°F (1.7°-7.2°C). The gelatin-containing water-in-oil emulsion was added at a meat emulsion temperature of 45°-48°F (7.2°-8.9°C) and chopping continued for two additional minutes, and until the temperature increased to 48°-52°F (8.9°-11.1°C).

The partially finished comminuted mixture was then run through a Mincemaster (Trade Mark) with two (2) plates (2.5 mm + 1.7 mm) and then into the hopper of a continuous stuffing machine at 62°F (16.7°C). The frankfurter emulsion was stuffed into 22 mm synthetic casing and the links run through a commercial smoke house according to the following schedule:

130°F (54.4°C)      - 20 minutes
150°F (65.6°C)      - 30 minutes
185°F (85°C)        - Until an internal temperatures of 165°F (73.9°C) was attained

Total time elapsed was 1 hour 15 minutes. The finished product had the following approximate analysis:

Protein       14.63

Fat           15.09

Water         67.56

Salt, Spices  2.72

Upon evaluation, the frankfurters were found to be of high quality, being succulent and having an excellent taste, texture and appearance. Tasters were unable to organoleptically differentiate between normal frankfurters made as a control and having 30% fat, and the frankfurters made in this example.

Example 3

A pork breakfast sausage product was prepared by the following procedure:

A gelatin-containing water-in-oil emulsion was prepared using 40 wt.% of pork trimmings containing 80% fat and 20% lean, and 60 wt.% of aqueous gelatin solution (94.975 wt.% of water, 3 wt.% of gelatin, 2 wt.% of sodium chloride and 0.025 wt.% of sodium nitrite) following the procedure set forth in Example 1. Following its formation, the final emulsion was cooled to a temperature below its solidification point.

In a separate procedure, 63.0 wt.% of pork trimmings having about 80% lean meat were added to a Laska bowl chopper (Trade Mark), together with sodium chloride at 2%, sodium erythorbate at 0.04%, sodium nitrite 0.02 wt.%, water 3.0 wt.% and 1.94 wt.% of white pepper, sage and mace as seasonings, all by weight of the finished product. The mixture was chopped 1 to 3 minutes at 35 to 45°F (1.7°-7.2°C). The solidified gelatin-containing water-in-oil emulsion (30.00 wt.%) prepared-above was added at the meat emulsion temperature and coarse chopped for an additional 2 to 3 minutes.

The coarse chopped, comminuted mixture was then run into the hopper of a continuous stuffing machine. The sausage emulsion was stuffed into 22 mm, edible casings and links of normal breakfast sausages were produced.

Upon cooking and evaluation, the sausages were found to be of high quality, being succulent, having an excellent texture and appearance, and having about half the usual fat content.

Example 4

A beef breakfast sausage product was prepared by the following procedure:

A gelatin-containing water-in-oil emulsion was prepared using beef trimmings containing 80% fat and 20% lean, following the procedure and using the amounts set forth in Example 1. Following its formation, the final emulsion was cooled to a temperature below its solidification point.

In a separate procedure, 63.0 wt.% of beef trimmings having about 80% lean meat were added to a Laska bowl chopper (Trade Mark), together with sodium chloride at 2%, sodium nitrite at 0.02%, sodium erythorbate at 0.04%, water at 3% and 1.94% of white pepper, sage and mace as seasonings, all by weight of the finished product. The mixture was chopped 1 to 3 minutes at 35°- 45°F (1.7°-7.2°C). The solidified gelatin-containing water-in-oil emulsion prepared above (30.0 wt.%) was added at the meat emulsion temperature and coarse chopped for an additional 2 to 3 minutes.

The coarse chopped, comminuted mixture was then run into the hopper of a continuous stuffing machine. The sausage emulsion was stuffed into 22 mm, edible casings and links of normal breakfast sausages were produced.

Upon cooking and evaluation, the sausages are found to be of high quality, being succulent, having an excellent texture and appearance, and having about half the usual fat content.

Example 5

Gelatin-containing water-in-oil emulsion was used to prepare cooked salami by the following procedure:

A gelatin-containing water-in-oil emulsion was prepared using beef trimmings containing 80% fat and 20% lean meat, following the procedure and using the amounts set forth in Example 1. At the conclusion of its preparation, the final emulsion was cooled to a temperature below its solidification point.

In a separate procedure, 75% of beef trimmings having 90% lean meat were added to a Laska bowl chopper (Trade Mark), where it was chopped with sodium chloride at 2%, sodium nitrite at 0.02%, sodium erythorbate at 0.04%, seasoning at 1.25% and water/ice at 3%, all by weight of the finished product. The mixture was chopped 1 to 3 minutes at 35-45°F (1.7°-7.2°C). The solidified gelatin-containing water-in-oil emulsion prepared above was added (18.69 wt.%) to the chopped mixture at the meat emulsion temperature and chopping was continued for an additional 1-2 minutes to produce a coarse chopped product. The coarse chopped, comminuted mixture, a salami emulsion, was then run into a hopper of a continuous stuffing machine. The salami emulsion was stuffed into 78 mm size synthetic casings and the large links run through a commercial smoke-house according to the following schedule:

130°F (54.4°C) for 20 minutes, 150°F (65.6°C) for 30 minutes, 180°F (82.2°C) until an internal temperature of 150°F (65.6°C) for 30 minutes was attained. The temperature of the smoke-house was then lowered to slowly dry out the salami.

Upon evaluation, the salami was found to be of high quality, being succulent and having excellent taste, texture and appearance. Salami so produced cannot be distinguished from salami prepared with a normal level of fat, even though the finished product has a substantially reduced fat content.

Examples 6-11

Low-fat frankfurters were prepared, using various hydrocolloids, by first preparing a water and oil emulsion having the following basic recipe (in percent by weight of the total sausage formulation):

| | |
|---|---|
| Beef fat | 8.02 wt.% |
| Lean beef | 1.56 wt.% |
| Curing salt (0.9% sodium nitrite) | 0.29 wt.% |
| Water | 13.60 wt.% |

and using the following hydrocolloids, all at a level of 1 wt.%.

| Example | Hydrocolloid |
|---------|--------------|
| 6 | Carrageenan |
| 7 | Agar |
| 8 | Locust bean gum (LBG) |
| 9 | Xanthan gum |
| 10 | Carrageenan + LBG [1] |
| 11 | Xanthan gum + LBG [1] |

[1] Both in a weight ratio of 1:1.

The hydrocolloid was dissolved or dispersed together with the curing salt in water, sometimes heating the water to 60°C. The solution or dispersion was then cooled to 30°C.

The beef fat and the lean beef were both chopped in a bowl chopper with 6 blades and set at a gap of 25 thousandths of an inch for 2 minutes on high speed, after which the hydrocolloid solution or dispersion was added and the bowl chopper was further operated on high speed until an emulsion was formed. All the emulsions had a small droplet size.

Following the normal procedure for making frankfurters, the following recipe was used for the brat (in percentages by weight of the total sausage formulation):

| | |
|---|---|
| Beef fat | 1.56 wt.% |
| Lean beef | 53.72 wt.% |
| Curing salt | 1.60 wt.% |
| Water/ice | 17.90 wt.% |
| Sodium ascorbate | 0.04 wt.% |
| Spices | 0.71 wt.% |

The lean beef, the standard salt and the water/ice were chopped in the bowl chopper used for the emulsion preparation for 2 minutes, after which the beef fat, the sodium ascorbate and the spices were added and the bowl chopping was continued for 1 minute. Then the water and oil emulsion was added and the bowl chopping was continued under a vacuum of -0.8 bar for 2 minutes, care being taken that the final temperature was below 10°C.

The meat dough obtained was stuffed into 18 mm casings using a full vacuum stuffer. The casings were linked into 12 cm lengths. The sausage was then dried for 1 hour at 60°C and subsequently dipped in a diluted liquid smoke preparation at 50°C for 60 seconds.

The frankfurters were then steam cooked for 10 minutes at 60°C, after which the casings were stripped off and the frankfurters were packed (4 per pouch) in pouches of a plastic laminate material including aluminium foil under nitrogen (less than 1% of residual oxygen). The frankfurters were then finally pasteurised.

The frankfurters obtained were assessed organoleptically. All sausages obtained in Examples 6 through 11 were good, meaty frankfurters with a firm, succulent texture and no evidence of instability, such as cook-out, but all having a considerably reduced fat content.

## Claims

1. A low-fat processed emulsion-type meat product comprising a continuous phase of a heat-set meat emulsion, characterised in that the product also contains a discontinuous phase consisting of particles of a water and oil emulsion, comprising an edible fat and from 0.5 to 10 percent by weight of the aqueous phase of the water and oil emulsion of an aqueous hydrocolloid solution or dispersion, the major portion of the fat in the product being supplied by the water and oil emulsion, and the weight ratio of the heat-set meat emulsion to the water and oil emulsion being 2.5:1.

2. The product of Claim 1, in which the hydrocolloid is selected from the group consisting of: gelatin, the seaweed extracts, the plant seed gums, the fermentation gums, mixtures of the plant seed gums and the seaweed extracts, and mixtures of the plant seed gums and the fermentation gums.

3. The product of Claim 1, in which the hydrocolloid is selected from the group consisting of: gelatin, agar, carrageenan, locust bean gum, xanthan gum, mixtures of locust bean gum and carrageenan, and mixtures of locust bean gum and xanthan gum.

4. The product of Claim 1, in which the aqueous hydrocolloid solution or dispersion is an aqueous gelatin solution in which the amount of gelatin is higher than the critical concentration at 59°F (15°C).

5. The product of Claim 4, in which the amount of gelatin is from 1.5 to 5 percent by weight of the aqueous phase of the water and oil emulsion.

6. The product of Claim 1, in which the fat content of the product is from 9 to 20 percent by weight.

7. The product of Claim 1, in which the edible fat is comminuted fat-rich meat trimmings.

8. The product of Claim 1, in which at least part of the edible fat is replaced by a low-calorie fat replacer, selected from the group consisting of: the edible polyesters of polyhydric alcohols having at least four free hydroxyl groups and saturated or unsaturated, straight or branched alkyl chain $C_8$-$C_{24}$ fatty acids, fatty alkyl ether derivatives of glycerol, esters of $C_8$-$C_{24}$ fatty alcohols and polycarboxylic acids, waxes, and mixtures thereof.

9. The product of Claim 1, in which at least part of the edible fat is replaced by a low-calorie fat replacer which is a polyester or mixture of polyesters of sugars or sugar alcohols of which, on an average, at least 70% of the hydroxyl groups have been esterified with saturated or unsaturated, straight or branched alkyl chain $C_8$-$C_{24}$ fatty acids.

10. The product of Claim 1, in which in the water and oil emulsion the majority of the water droplets have an average size of 1-10 $\mu$m.

11. The product of Claim 1, in which the aqueous hydrocolloid solution or dispersion comprises 2 percent by weight of sodium chloride and 0.025 percent by weight of sodium nitrite.

12. The product of Claim 1, in which the heat-set meat emulsion comprises additives, selected from the group consisting of: monoglycerides and/or diglycerides, stearoyl lactylates, lecithin, vegetables, herbs, spices, vegetable proteins, fungal proteins, antioxidants, and mixtures thereof.

13. The product of Claim 1, in which the processed emulsion-type meat product is a sausage, wherein the water and oil emulsion has a continuous phase comprising edible fat and a discontinuous phase comprising a gelled aqueous hydrocolloid solution or dispersion.

14. A method for preparing a low-fat processed meat product which comprises:

(a) forming an aqueous hydrocolloid solution or dispersion;

(b) combining the hydrocolloid solution or dispersion with an edible fat to form a water and oil emulsion;

(c) forming a meat emulsion of high protein content and good binding capacity;

(d) dispersing droplets of the water and oil emulsion formed in step (b) evenly throughout the meat emulsion formed in step (c); and

(e) causing the meat emulsion to set.

15. The sausage of claim 14, wherein the fat content of the product is in the range of 9-20%, and a major portion thereof is supplied by the water and oil emulsion formed in step (b).

16. The method of claim 14, wherein the meat emulsion of step (c) is combined with the water and oil emulsion of step (b) in the weight proportion of 2.5 to 1.0, respectively.

17. The method of Claim 14, wherein the edible fat is comminuted high fat content meat cuttings.

18. The method of any one of Claims 14-17, wherein the hydrocolloid is selected from the group consisting of: gelatin, the seaweed extracts, the plant seed gums, the fermentation gums, mixtures of the plant seed gums and the seaweed extracts, and mixtures of the plant seed gums and the fermentation gums.

19. The method of any one of Claims 14-18, wherein the hydrocolloid is selected from the group consisting of: gelatin, agar, carrageenan, locust bean gum, xanthan gum, mixtures of locust bean gum and carrageenan, and mixtures of locust bean gum and xanthan gum.

20. The method of any of Claims 14-18, wherein the aqueous hydrocolloid solution is an aqueous gelatin solution in which the amount of gelatin is higher than the critical concentration at 59°F (15°C).

21. The method of any of Claims 14-20, wherein the amount of hydrocolloid used is from 0.5 to 10 percent by weight of the aqueous phase of the water and oil emulsion.

22. The method of any one of Claims 14-21, wherein at least part of the edible fat is replaced by a low-calorie fat replacer, selected from the group consisting of: the edible polyesters of polyhydric alcohols having at least four free hydroxyl groups, and saturated or unsaturated, straight or branched alkyl chain $C_8$-$C_{24}$ fatty acids, fatty alkyl ether derivatives of glycerol, esters of $C_8$-$C_{24}$ fatty alcohols and polycarboxylic acids, waxes, and mixtures thereof.

23. The method of any of Claims 14-21, in which at least part of the edible fat is replaced by a low-calorie fat replacer which is a polyester or mixture of polyesters of sugars or sugar alcohols of which, on an average, at least 70% of the hydroxyl groups have been esterified with saturated or unsaturated, straight or branched chain $C_8$-$C_{24}$ fatty acids.

24. The method of any of Claims 14-23, wherein the aqueous hydrocolloid solution or dispersion comprises 2% by weight of sodium chloride and 0.025% by weight of curing agent.

25. The method of any of Claims 14-24, wherein the meat emulsion comprises additives, selected from the group consisting of: monoglycerides and/or diglycerides, stearoyl lactylates, lecithin, vegetables, herbs, spices, vegetable proteins, fungal proteins, antioxidants, and mixtures thereof.

## Patentansprüche

1. Fettarmes haltbares Fleischprodukt vom Emulsionstyp umfassend eine kontinuierliche Phase einer wärmegehärteten Fleischemulsion, dadurch gekennzeichnet, daß das Produkt auch eine diskontinuierliche Phase bestehend aus Teilchen einer Wasser- und Ölemulsion enthält, umfassend ein eßbares Fett und 0,5 bis 10 Gew.% der wässerigen Phase der Wasser- und Ölemulsion einer wässerigen Hydrokolloidlösung oder -dispersion, wobei der Hauptteil des Fettes im Produkt durch die Wasser- und Ölemulsion geliefert wird, und das Gewichtsverhältnis der wärmegehärteten Fleischemulsion zur Wasser- und Ölemulsion 2,5 : 1 beträgt.

2. Produkt nach Anspruch 1, in dem das Hydrokolloid ausgewählt ist aus der Gruppe bestehend aus Gelatine, den Meerespflanzenextrakten, den Pflanzensamengummen, den Fermentationsgummen, Mischungen der Pflanzensamengummen und der Meerespflanzenextrakte und Mischungen der Pflanzensamengummen und der Fermentationsgummen.

3. Produkt nach Anspruch 1, in dem das Hydrokolloid ausgewählt ist aus der Gruppe bestehend aus Gelatine, Agar, Karrageenan, Johannisbrotgummi, Xanthangummi, Mischungen von Johannisbrotgummi und Karrageenan und Mischungen von Johannisbrotgummi und Xanthangummi.

4. Produkt nach Anspruch 1, in dem die wässerige Hydrokolloidlösung oder -dispersion eine wässerige Gelatinelösung ist, in der die Gelatinemenge höher ist als die kritische Konzentration bei 59°F (15°C).

5. Produkt nach Anspruch 4, in dem die Gelatinemenge 1,5 bis 5 Gew.% der wässerigen Phase der Wasser- und Ölemulsion beträgt.

6. Produkt nach Anspruch 1, in dem der Fettgehalt des Produktes 9 bis 20 Gew.% beträgt.

7. Produkt nach Anspruch 1, in dem das eßbare Fett zerkleinerte fettreiche Fleischabfälle sind.

8. Produkt nach Anspruch 1, in dem zumindest ein Teil des eßbaren Fettes durch einen kalorienarmen Fettersatz ausgewählt aus der Gruppe bestehend aus den eßbaren Polyestern von mehrwertigen Alkoholen mit mindestens vier freien Hydroxylgruppen und gesättigten oder ungesättigten $C_8$-$C_{24}$-Fettsäuren mit gerader oder verzweigter Alkylkette, Fettalkylätherderivaten von Glycerin, Estern von $C_8$-$C_{24}$- Fettalkoholen und Polycarbonsäuren, Wachsen und Mischungen hievon ersetzt ist.

9. Produkt nach Anspruch 1, in dem zumindest ein Teil des eßbaren Fettes durch einen kalorienarmen Fettersatz ersetzt ist, der ein Polyester oder eine Mischung von Polyestern von Zuckern oder Zuckeralkoholen ist, wovon durchschnittlich mindestens 70 % der Hydroxylgruppen mit gesättigten oder ungesättigten $C_8$-$C_{24}$-Fettsäuren mit gerader oder verzweigter Alkylkette verestert wurden.

10. Produkt nach Anspruch 1, in dem in der Wasser- und Ölemulsion der Großteil der Wassertröpfchen eine mittlere Größe von 1 bis 10 μm aufweist.

11. Produkt nach Anspruch 1, in dem die wässerige Hydrokolloidlösung oder -dispersion 2 Gew.% Natriumchlorid und 0,025 Gew.% Natriumnitrit umfaßt.

12. Produkt nach Anspruch 1, in dem die wärmegehärtete Fleischemulsion Additive ausgewählt aus der Gruppe bestehend aus Monoglyceriden und/oder Diglyceriden, Stearoyllactylaten, Lecithin, Gemüse, Kräutern, Gewürzen, Pflanzenproteinen, Pilzproteinen, Antioxidantien und Mischungen hievon umfaßt.

13. Produkt nach Anspruch 1, in dem das haltbare Fleischprodukt vom Emulsionstyp eine Wurst ist, in der die Wasser- und Ölemulsion eine kontinuierliche Phase umfassend eßbares Fett und eine diskontinuierliche Phase umfassend eine gelierte wässerige Hydrokolloidlösung oder -dispersion aufweist.

14. Verfahren zum Herstellen eines fettarmen haltbaren Fleischproduktes, das umfaßt:
a) Bilden einer wässerigen Hydrokolloidlösung oder -dispersion,
b) Kombinieren der Hydrokolloidlösung oder -dispersion mit einem eßbaren Fett unter Bildung einer Wasser- und Ölemulsion,
(b) Bilden einer Fleischemulsion mit hohem Proteingehalt und guter Bindungsfähigkeit,
(c) gleichförmiges Dispergieren von Tröpfchen der in Schritt (b) gebildeten Wasser- und Ölemulsion durch die in Schritt (c) gebildete Fleischemulsion und
(d) Bewirken der Härtung der Fleischemulsion.

EP 0 325 315 B1

15. Verfahren nach Anspruch 14, worin der Fettgehalt des Produktes im Bereich von 9 bis 20 Gew.% liegt und ein Großteil desselben von der in Schritt (b) gebildeten Wasser- und Ölemulsion geliefert wird.

16. Verfahren nach Anspruch 14, worin die Fleischemulsion von Schritt (c) mit der Wasser- und Ölemulsion von Schritt (b) im Gewichtsverhältnis von 2,5 zu 1,0 kombiniert wird.

17. Verfahren nach Anspruch 14, worin das eßbare Fett zerkleinerte Fleischstücke mit hohem Fettgehalt sind.

18. Verfahren nach einem der Ansprüche 14 bis 17, worin das Hydrokolloid ausgewählt ist aus der Gruppe bestehend aus Gelatine, den Meerespflanzenextrakten, den Pflanzensamengummen, den Fermentationsgummen, Mischungen der Pflanzensamengummen und der Meerespflanzenextrakte und Mischungen der Pflanzensamengummen und der Fermentationsgummen.

19. Verfahren nach einem der Ansprüche 14 bis 18, worin das Hydrokolloid ausgewählt ist aus der Gruppe bestehend aus Gelatine, Agar, Karrageenan, Johannisbrotgummi, Xanthangummi, Mischungen von Johannisbrotgummi und Karrageenan und Mischungen von Johannisbrotgummi und Xanthangummi.

20. Verfahren nach einem der Ansprüche 14 bis 18, worin die wässerige Hydrokolloidlösung oder -dispersion eine wässerige Gelatinelösung ist, in der die Gelatinemenge höher ist als die kritische Konzentration bei 59°F (15°C).

21. Verfahren nach einem der Ansprüche 14 bis 20, worin die die Menge des verwendeten Hydrokolloids 0,5 bis 10 Gew.% der wässerigen Phase der Wasser- und Ölemulsion beträgt.

22. Verfahren nach einem der Ansprüche 14 bis 21, worin zumindest ein Teil des eßbaren Fettes durch einen kalorienarmen Fettersatz ausgewählt aus der Gruppe bestehend aus den eßbaren Polyestern von mehrwertigen Alkoholen mit mindestens vier freien Hydroxylgruppen und gesättigten oder ungesättigten $C_8$-$C_{24}$-Fettsäuren mit gerader oder verzweigter Alkylkette, Fettalkylätherderivaten von Glycerin, Estern von $C_8$-$C_{24}$-Fettalkoholen und Polycarbonsäuren, Wachsen und Mischungen hievon ersetzt wird.

23. Verfahren nach einem der Ansprüche 14 bis 21, worin zumindest ein Teil des eßbaren Fettes durch einen kalorienarmen Fettersatz ersetzt wird, der ein Polyester oder eine Mischung von Polyestern von Zuckern oder Zuckeralkoholen ist, wovon durchschnittlich mindestens 70 % der Hydroxylgruppen mit gesättigten oder ungesättigten $C_8$-$C_{24}$-Fettsäuren mit gerader oder verzweigter Alkylkette verestert wurden.

24. Verfahren nach einem der Ansprüche 14 bis 23, worin die wässerige Hydrokolloidlösung oder -dispersion 2 Gew.% Natriumchlorid und 0,025 Gew.% Härter umfaßt.

25. Verfahren nach einem der Ansprüche 14 bis 24, worin die Fleischemulsion Additive ausgewählt aus der Gruppe bestehend aus Monoglyceriden und/oder Diglyceriden, Stearoyllactylaten, Lecithin, Gemüse, Kräutern, Gewürzen, Pflanzenproteinen, Pilzproteinen, Antioxidantien und Mischungen hievon umfaßt.

## Revendications

1. Produit de boucherie du type émulsion, traité, à faible teneur en graisse, comprenant une phase continue d'une émulsion de viande thermodurcie, caractérisé en ce qu'il contient également une phase discontinue formée de particules d'une émulsion d'eau et d'huile, comprenant une graisse comestible et de 0,5 à 10% en poids par rapport à la phase aqueuse de l'émulsion d'eau et d'huile, d'une solution ou dispersion aqueuse d'hydrocolloïde, la majeure partie de la graisse dans le produit étant introduite par l'émulsion d'eau et d'huile, et le rapport pondéral de l'émulsion de viande thermodurcie à l'émulsion d'eau et d'huile étant de 2,5:1.

2. Produit selon la revendication 1, dans lequel l'hydrocolloïde est choisi parmi la gélatine, les extraits d'algue marine, les gommes de graines végétales, les gommes de fermentation, les mélanges de gommes de graines végétales et des extraits d'algue marine et des mélanges de gommes de graines végétales avec des gommes de fermentation.

3. Produit selon la revendication 1, dans lequel l'hydrocolloïde est choisi parmi la gélatine, l'agar agar, le carragheenane, la gomme de caroube, la gomme de xanthane, les mélanges de gomme de caroube et de carrhageenane et des mélanges de gomme de caroube et de gomme de xanthane.

4. Produit selon la revendication 1, dans lequel la solution ou dispersion d'hydrocolloïde aqueuse est une solution aqueuse de gélatine dans laquelle la quantité de gélatine est supérieure à la concentration critique à 59°F (15°C).

5. Produit selon la revendication 4, dans lequel la quantité de gélatine est de 1,5 à 5% en poids de la phase aqueuse de l'émulsion d'eau et d'huile.

6. Produit selon la revendication 1, dans lequel la teneur en graisse est de 9 à 20% en poids.

7. Produit selon la revendication 1, dans lequel la graisse comestible est constituée par des rognures broyées de viande riches en graisse.

8. Produit selon la revendication 1, dans lequel une partie au moins de la graisse comestible est remplacée

11

par un substitut de graisse basse calorie choisi parmi les polyesters comestibles de polyalcools comportant au moins quatre groupes hydroxyliques libres et les acides gras en $C_{8-24}$ à chaîne alkylique droite ou ramifiée, saturés ou insaturés, les dérivés gras d'éthers alkyliques de glycérol, les esters d'alcools gras en $C_{8-24}$ et d'acides polycarboxyliques, les cires et leurs mélanges.

9. Produit selon la revendication 1, dans lequel une partie au moins de la graisse comestible est remplacée par un substitut de graisse basse calorie qui est un polyester ou un mélange de polyesters de sucres ou d'alcools de sucres dont en moyenne 70% au moins des groupes hydroxyle ont été estérifiés avec des acides gras en $C_{8-24}$ à chaîne alkylique droite ou ramifiée, saturés ou insaturés.

10. Produit selon la revendication 1, dans lequel dans l'émulsion d'eau et d'huile, la majeure partie des goutelettes d'eau ont une granulométrie moyenne de 1 à 10 μm.

11. Produit selon la revendication 1, dans lequel la solution ou dispersion aqueuse d'hydrocolloide comprend 2% en poids de chlorure de sodium et 0,025% en poids de nitrite de sodium.

12. Produit selon la revendication 1, dans lequel l'émulsion de viande thermodurcie comprend des additifs qui sont choisis parmi les monoglycérides et/ou diglycérides, les lactylates de stéaroyle, la lécithine, les légumes, les herbes, les épices, les protéines végétales, les protéines fongiques, les antioxydants et des mélanges de ceux-ci.

13. Produit selon la revendication 1, dans lequel le produit de viande traité du type émulsion est une saucisse, dans lequel l'émulsion d'eau et d'huile comporte une phase continue comprenant une graisse comestible et une phase discontinue comprenant une solution ou dispersion aqueuse gélifiée d'hydrocolloïde.

14. Procédé de préparation d'un produit de viande traité à faible teneur en graisse, qui consiste :
(a) à former une solution ou dispersion aqueuse d'hydrocolloïde ;
(b) à combiner la solution ou dispersion d'hydrocolloïde avec une graisse comestible pour former une émulsion d'eau et d'huile ;
(c) à former une émulsion de viande à haute teneur en protéines et ayant une bonne capacité de fixation ;
(d) à disperser des gouttelettes de l'émulsion d'eau et d'huile formée au stade (b) régulièrement dans l'émulsion de viande formée au stade (c) ; et
(e) à faire durcir l'émulsion de viande.

15. Procédé selon la revendication 14, dans lequel la teneur en graisse du produit est comprise entre 9 et 20% et une portion majeure de cette dernière est fournie par l'émulsion d'eau et d'huile formée au stade (b).

16. Procédé selon la revendication 14, dans lequel l'émulsion de viande du stade (c) est combinée avec l'émulsion d'eau et d'huile du stade (b) en un rapport pondéral de 2,5:1,0.

17. Procédé selon la revendication 14, dans lequel la graisse comestible est constituée de rognures de viande pulvérisées à haute teneur en graisse.

18. Procédé selon l'une quelconque des revendications 14 à 17, dans lequel l'hydrocolloïde est choisi parmi la gélatine, les extraits d'algue marine, les gommes de graines végétales, les gommes de fermentation, les mélanges des gommes de graines végétales et des extraits d'algue marine et les mélanges de gommes de graines végétales et de gommes de fermentation.

19. Procédé selon l'une quelconque des revendications 14 à 18, dans lequel l'hydrocolloïde est choisi parmi la gélatine, l'agar-agar, le carrhageenane, la gomme de caroube, la gomme de xanthane, des mélanges de gomme de caroube et de carrahageenane et de gomme de xanthane.

20. Procédé selon l'une quelconque des revendications 14 à 18, dans lequel la solution aqueuse d'hydrocolloïde est une solution aqueuse de gélatine dans laquelle la quantité de gélatine est supérieure à la concentration critique à 15°C (59°F).

21. Procédé selon l'une quelconque des revendications 14 à 20, dans lequel la quantité d'hydrocolloïde qu'on utilise est de 0,5 à 10% en poids de la phase aqueuse de l'émulsion d'eau et d'huile.

22. Procédé selon l'une quelconque des revendications 14 à 21, dans lequel une partie au moins de la graisse comestible est remplacée par un substitut de graisse basse calorie choisi parmi les polyesters comestibles de polyalcools contenant au moins quatre groupes hydroxyliques libres, et les acides gras en $C_{8-24}$ à chaîne alkyle linéaire ou ramifiée, saturés ou insaturés, les dérivés d' éther alkylique de glycérol, les esters d'alcools gras en $C_{8-24}$ et des acides polycarboxyliques, des cires et des mélanges de ceux-ci.

23. Procédé selon l'une quelconque des revendications 14 à 21, dans lequel une partie au moins de la graisse comestible est remplacée par un substitut de graisse basse calorie qui est un polyester ou un mélange de polyesters de sucres ou d'alcools de sucres dont au moins 70% en moyenne des groupes hydroxyliques ont été estérifiés avec des acides gras saturés ou insaturés en $C_{8-24}$ à chaîne droite ou ramifiée.

24. Procédé selon l'une quelconque des revendications 14 à 23, dans lequel la solution ou dispersion aqueuse d'hydrocolloïde comprend 2% en poids de chlorure de sodium et 0,025% en poids d'un agent de durcissement.

25. Procédé selon l'une quelconque des revendications 14 à 24, dans lequel l'émulsion de viande comprend des additifs qui sont notamment des monoglycérides et/ou diglycérides, les lactylates de stéaroyle, la lécithine, les légumes, les herbes, les épices, les protéines végétales, les protéines fongiques, les antioxydants et les mélanges de ceux-ci.